# EUROPEAN PATENT APPLICATION

(11) **EP 4 184 116 A1**
(43) Date of publication of application: **24.05.2023**
(21) Application number: 21846782.7
(22) Date of filing: 19.07.2021
(51) Int. Cl.: G01C 13/00, B64D 43/00, G01C 7/04, G01C 15/00

(54) **DETECTION SYSTEM, SUSPENDED DEVICE, AND DETECTION METHOD**

(30) Priority: 20.07.2020 JP 2020123977
(71) Applicant: Amuse Oneself Inc., Osaka-city, Osaka 530-0004 (JP)
(72) Inventor: TOMII Takaharu, Osaka-city, Osaka 530-0004 (JP)
(74) Representative: D Young & Co LLP
(86) International application number: PCT/JP2021/026929
(87) International publication number: WO 2022/019257

(57) **Abstract**

A detection system, a suspended device, and a detection method provided herein can detect underwater conditions in various environments. An aerial vehicle 1 using an unmanned aerial vehicle such as a drone, and a suspended device 2 suspended from the aerial vehicle 1 by a string-like member 3 are used to conduct detection of underwater conditions, for example, a survey of seafloor topography. The suspended device 2 is formed by, for example, a rod-like member 20 equipped with a surface unit 21, a float 23, and an underwater unit 22. The surface unit 21 has an antenna 211 for communication required to acquire position information such as radio waves from a GPS satellite. The underwater unit 22 has a detecting section (a survey section 222) for detecting underwater conditions. A detection result from the detecting section is recorded in association with the position information.

## Description

### Technical Field

The present invention relates to a detection system for detecting underwater conditions, a suspended device used in the detection system, and a detection method using the suspended device.

### Background Art

Techniques for detecting underwater conditions have been required for various purposes. For example, PTL 1 discloses a method for measuring a profile of the seafloor by means of a transmitting arrangement and a receiving arrangement each attached to a watercraft, wherein the transmitting arrangement emits sound signals and the receiving arrangement receives sound waves reflected by the profile of the seafloor.

### Citation List

### Patent Literature

PTL 1 : JP 2013-506117 A

### Summary of Invention

### Technical Problem

However, it is difficult to perform the method for measuring a profile of the seafloor by means of the watercraft as disclosed in PTL 1, in an environment difficult for watercraft navigation (for example, in shallow water, etc.).

The present invention is made in consideration of such circumstances. An object of the present invention is to provide a detection system that can be performed in various environments.

Another object of the present invention is to provide a suspended device to be used in the detection system according to the present invention.

A further object of the present invention is to provide a detection method using the suspended device according to the present invention.

### Solution to Problem

To achieve the above objects, a detection system according to the present application is a detection system for detecting underwater conditions, characterized by including an aerial vehicle and a suspended device suspended from the aerial vehicle, wherein the suspended device includes a detecting section that performs an underwater detection operation, and a position information acquisition section that acquires position information.

The detection system according to the present application is characterized in that the suspended device further includes a float that floats on a water surface, and that the detecting section is mounted to stay below the float during the detection operation.

The detection system according to the present application is characterized in that the suspended device includes, as the position information acquisition section, an antenna that receives a radio wave from a GNSS satellite, and that the antenna is mounted to stay above the float during the detection operation.

The detection system according to the present application is characterized in that the suspended device further includes a posture acquisition section that acquires posture information.

The detection system according to the present application is characterized in that the detection system further includes a string-like member that connects the aerial vehicle and the suspended device to each other, and a winding mechanism capable of winding in the string-like member.

Further, a suspended device according to the present application is a suspended device that can be suspended from an aerial vehicle. The suspended device is characterized by including an attachment to which a string-like member can be attached, a detecting section that performs an underwater detection operation, and a position information acquisition section that acquires position information.

Further, a detection method according to the present application is a detection method using an aerial vehicle. The detection method is characterized by including: suspending the above-mentioned suspended device from the aerial vehicle, by the string-like member attached to the attachment; allowing the aerial vehicle to fly such that the detecting section of the suspended device stays under a water surface; and detecting underwater conditions by the detecting section.

### Advantageous Effects of Invention

The detection system and the detection method according to the present invention detect underwater conditions by using an aerial vehicle. The suspended device according to the present invention is suspended from the aerial vehicle and detects underwater conditions. Accordingly, the present invention enables detection of underwater conditions in various environments, for example, in a shallow sea area where watercraft navigation is difficult, and thus presents remarkably advantageous effects.

### Brief Description of Drawings

Fig. 1 is an outline illustration schematically showing an example of an overview of a detection system according to the present application.
Fig. 2 is an outline illustration schematically showing an example of an overview of the detection system according to the present application.
Fig. 3 is an outline external view showing an example of an aerial vehicle provided in the detection system according to the present application.
Fig. 4 is an outline external view showing an example of the aerial vehicle provided in the detection system according to the present application.
Fig. 5 is an outline external view showing an example of the aerial vehicle provided in the detection system according to the present application.
Fig. 6 is a functional block diagram representing a configuration example of the aerial vehicle provided in the detection system according to the present application.
Fig. 7 is an outline external view showing an example of a suspended device provided in the detection system according to the present application.
Fig. 8 is a functional block diagram representing a configuration example of a surface unit relating to the suspended device provided in the detection system according to the present application.
Fig. 9 is a functional block diagram representing a configuration example of an underwater unit relating to the suspended device provided in the detection system according to the present application.

### Description of Embodiments

A detection system according to the present application is applied to, for example, detection of underwater conditions such as a survey of seafloor topography. The detection is conducted by means of an unmanned aerial vehicle (UAV), called drone or the like. The following description, made with reference to the drawings, concerns an embodiment of the detection system that conducts a survey of seafloor topography with use of an aerial vehicle 1 illustrated in the drawings. It should be noted that the following embodiment is an example of embodying the present invention and does not intend to limit the technical scope of the present invention.

### (Overview of the detection system)

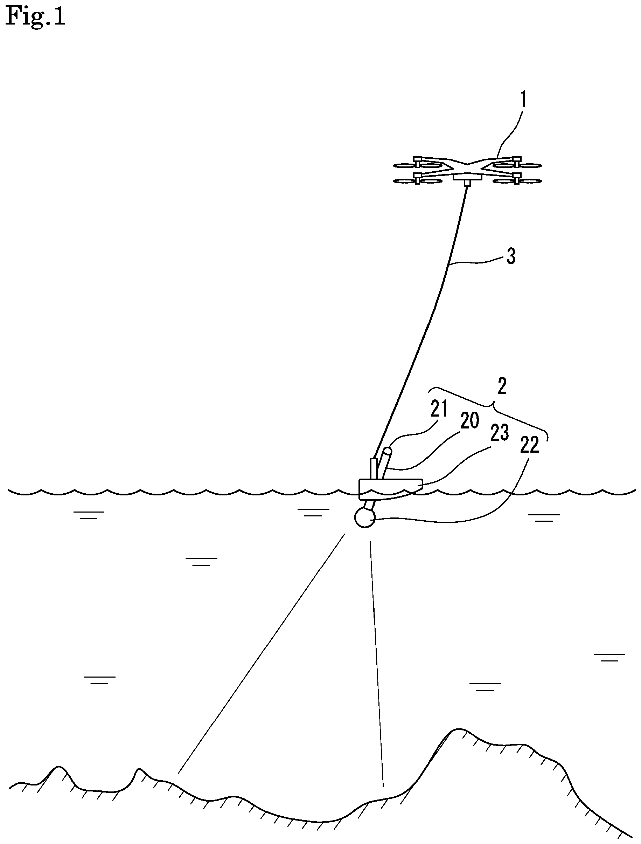

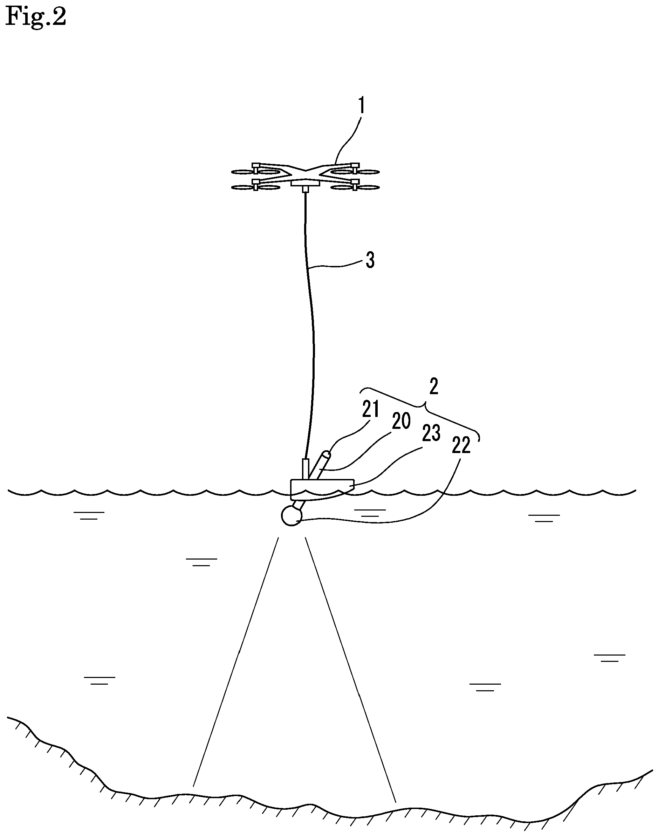

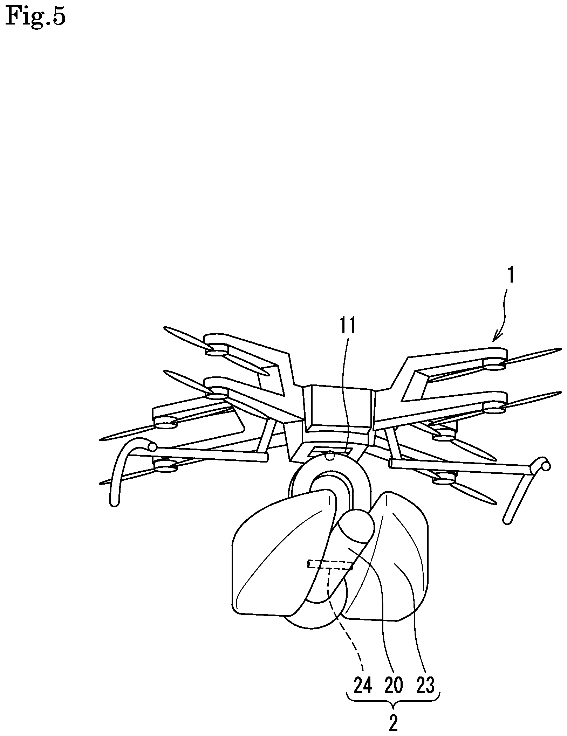

Fig. 1 and Fig. 2 are outline illustrations schematically showing examples of an overview of the detection system according to the present application. Fig. 1 illustrates detection of underwater conditions such as a survey of seafloor topography, conducted while the aerial vehicle 1 is flying level in the air. Fig. 2 illustrates a survey conducted while the aerial vehicle 1 is staying in one place (hovering) in the air. For example, for a survey of an extensive seafloor topography, the detection system according to the present application conducts the survey while allowing the aerial vehicle 1 to fly as illustrated in Fig. 1, but the detection system may also detect underwater conditions while allowing the aerial vehicle 1 to stay in one place as illustrated in Fig. 2. The detection system according to the present application includes the aerial vehicle 1 such as an unmanned aerial vehicle, and a suspended device 2 suspended from the aerial vehicle 1. The suspended device 2 is suspended from the aerial vehicle 1 by a string-like member 3 such as a wire, a chain, or a rope. The suspended device 2 includes a rod-like member 20 made of a lightweight rigid body of carbon fiber reinforced plastic (CFRP) or the like. The rod-like member 20 is equipped with a surface unit 21 at a first end thereof, an underwater unit 22 at a second end thereof, and a float 23 around a center thereof between the first end and the second end. The float 23 is journaled on the rod-like member 20 by a support shaft 24 to be described later (see Fig. 5, etc.). An angle between the rod-like member 20 and the float 23 can be controlled by rotation of the support shaft 24.

For a survey of underwater conditions, the suspended device 2 is dropped downwards from the aerial vehicle 1 and remains floating on the water surface during the survey. In the suspended device 2 floating on the water surface, the float 23 floats near the water surface, the surface unit 21 at the first end stays above the water surface, and the underwater unit 22 at the second end stays under the water surface. The underwater unit 22 staying under the water surface conducts a survey of underwater conditions such as seafloor topography. During the survey of underwater conditions, the aerial vehicle 1 may be traveling as illustrated in Fig. 1 or staying in one place as illustrated in Fig. 2, depending on the flight condition of the aerial vehicle 1.

### (Configuration of various devices provided in the detection system)

The next description is directed to various devices provided in the detection system.

### (Aerial vehicle 1)

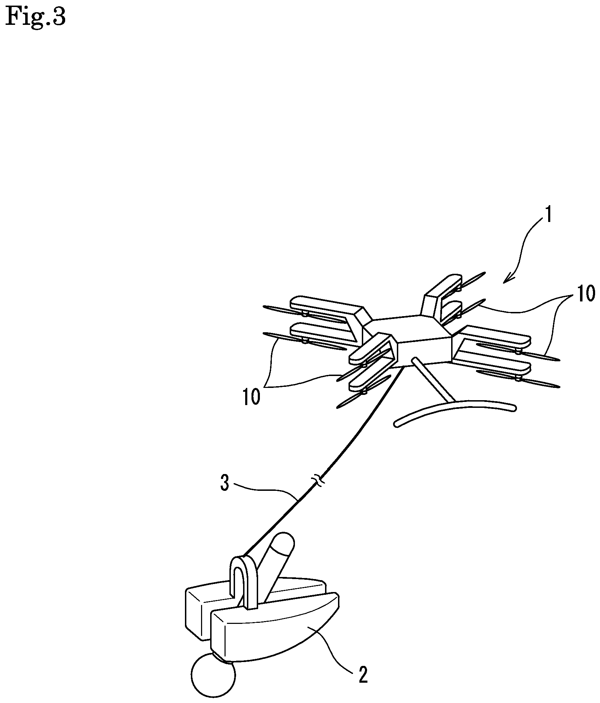

Fig. 3 is an outline external view showing an example of the aerial vehicle 1 provided in the detection system according to the present application. Fig. 3 illustrates the aerial vehicle 1 from which the suspended device 2 is suspended, with the string-like member 3 wound out. The aerial vehicle 1 is, for example, an unmanned aerial vehicle such as a small unmanned helicopter, called drone, equipped with a flight mechanism 10. When the aerial vehicle 1 is a small unmanned helicopter, the aerial vehicle 1 is equipped with, for example, one or more rotors as the flight mechanism 10. The aerial vehicle 1 may have a single rotor, or may be a multicopter having a plurality of rotors arranged evenly around an airframe thereof, as illustrated in Fig. 3. Examples of the multicopter for the aerial vehicle 1 include a 4-rotor quadcopter, a 6-rotor hexacopter, an 8-rotor octocopter, and the like.

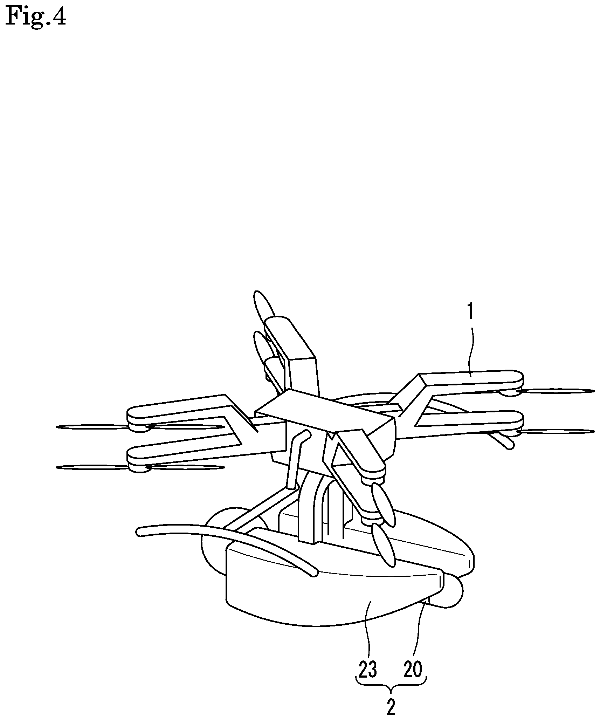

Fig. 4 and Fig. 5 are outline external views showing examples of the aerial vehicle 1 provided in the detection system according to the present application. Fig. 4 and Fig. 5 illustrate the aerial vehicle 1 retaining the suspended device 2, with the string-like member 3 wound in and the suspended device 2 pulled up. Fig. 4 is a perspective view from above. Fig. 5 is a perspective view from below, with a part of the components being transparent. Various mechanisms are provided at the bottom of the aerial vehicle 1, including a winding mechanism 11 such as an electric winch or the like capable of winding in the string-like member 3. The winding mechanism 11 serves to wind in the string-like member 3. The winding mechanism 11 is provided with ancillary equipment such as a winding drum for the string-like member 3 and a motor for rotating the drum.

Once the suspended device 2 is pulled up to the upper end, the suspended device 2 is retained with the rod-like member 20 oriented substantially horizontally by rotation of the support shaft 24. To stabilize the retention of the suspended device 2 with the rod-like member 20 oriented substantially horizontally, the suspended device 2 may be appropriately designed to engage with ancillary equipment such as a hook, an electromagnet, or the like. By pulling up the suspended device 2 and retaining the suspended device 2 with the rod-like member 20 oriented substantially horizontally, the aerial vehicle 1 can stabilize the flight to the survey point or the flight back from the survey point after the survey. The winding mechanism 11 is arranged to be detachable from the string-like member 3, when necessary. In case of abnormality in various situations such as during a survey or a winding operation (for example, when the string-like member 3 is entangled), this arrangement allows detachment of the string-like member 3 and collection of the aerial vehicle 1. After the string-like member 3 is detached, the suspended device 2 can be easily collected because the suspended device 2 equipped with the float 23 is capable of floating on the water surface. A floating point of the suspended device 2 can be spotted easily if the suspended device 2 is configured to acquire and transmit its position information.

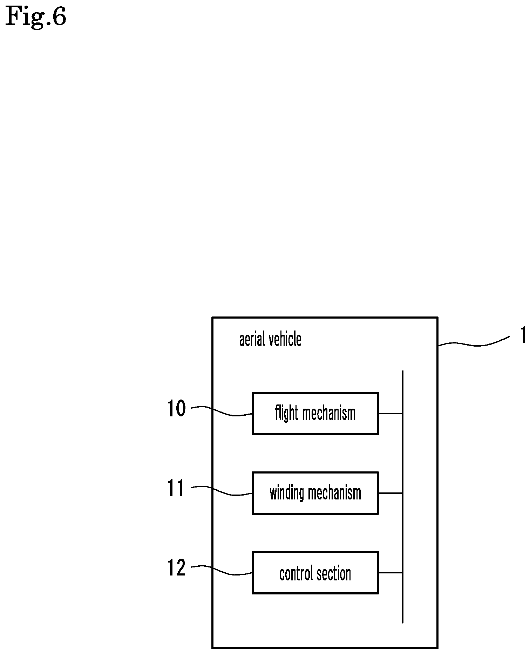

Fig. 6 is a functional block diagram representing a configuration example of the aerial vehicle 1 provided in the detection system according to the present application. In addition to the flight mechanism 10 and the winding mechanism 11 described above, the aerial vehicle 1 includes other components such as a control section 12 that controls the entire device.

The control section 13 includes a microprocessing unit (MPU) for running a program, a chip such as memory for storing a program and data, and is a circuit for controlling the operation of the flight mechanism 10 and the winding mechanism 11. The control section 13 controls the flight mechanism 10 to fly the aerial vehicle 1, based on a flight route that is preset in the memory or based on a command transmitted by wireless communication from a controller operated by an operator. The control section 13 also controls the winding mechanism 11 to perform certain actions, such as dropping the suspended device 2, allowing the suspended device 2 to conduct a survey, pulling up and retaining the suspended device 2, based on a preset action or a command from the controller.

### (Suspended device 2)

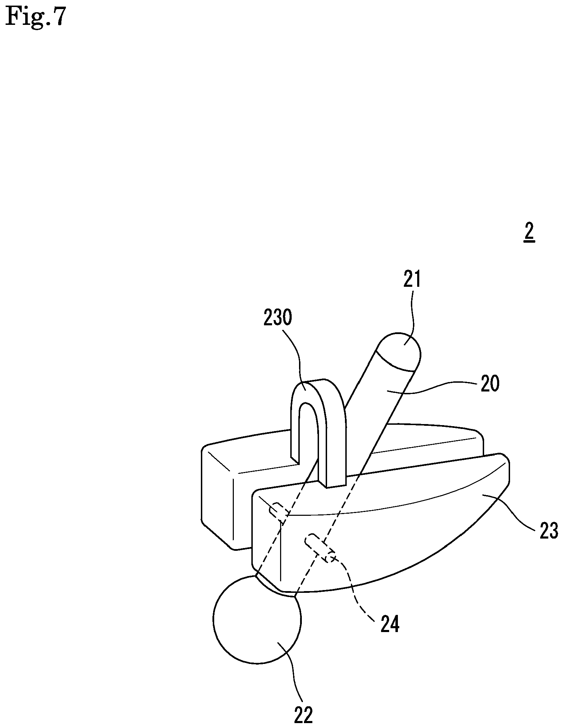

Fig. 7 is an outline external view showing an example of the suspended device 2 provided in the detection system according to the present application, with a part of the components being transparent. The suspended device 2 has the rod-like member 20, the surface unit 21, the underwater unit 22, the float 23, the support shaft 24, and the like. The suspended device 2 is configured such that, when dropped to the water surface, the longitudinal direction of the rod-like member 20 is oriented substantially vertically, with the float 23 floating on the water surface, the surface unit 21 staying above water, and the underwater unit 22 staying under water. The float 23 has an attachment 230 to which an end of the string-like member 3 is attached. The suspended device 2 is thereby connected with the string-like member 3 and suspended from the aerial vehicle 1. The suspended device 2 keeps floating on the water surface while conducting a survey of underwater conditions. The rod-like member 20 is preferably made of a lightweight rigid body of carbon fiber reinforced plastic (CFRP) or the like. Alternatively, if the rod-like member 20 can recover its original shape after being bent or deformed otherwise due to an external force, the rod-like member 20 may be made of other materials such as a flexible resin.

The float 23, made of hard foamed polystyrene or the like, has a lower density than water and has a sufficient buoyancy. The float 23 has a substantially boat-like shape, split into a right part and a left part in plan view and holding the rod-like member 20 in the middle. The right part and the left part of the boat body is connected by the generally U-shaped attachment 230. When the aerial vehicle 1 is flying level during a survey, the substantially boat-like shape of the float 23 serves to stabilize a travel direction of the suspended device 2 that is towed by the aerial vehicle 1. A stabilizing portion such as a fin or a stabilizer may be further added to stabilize the travel direction of the suspended device 2.

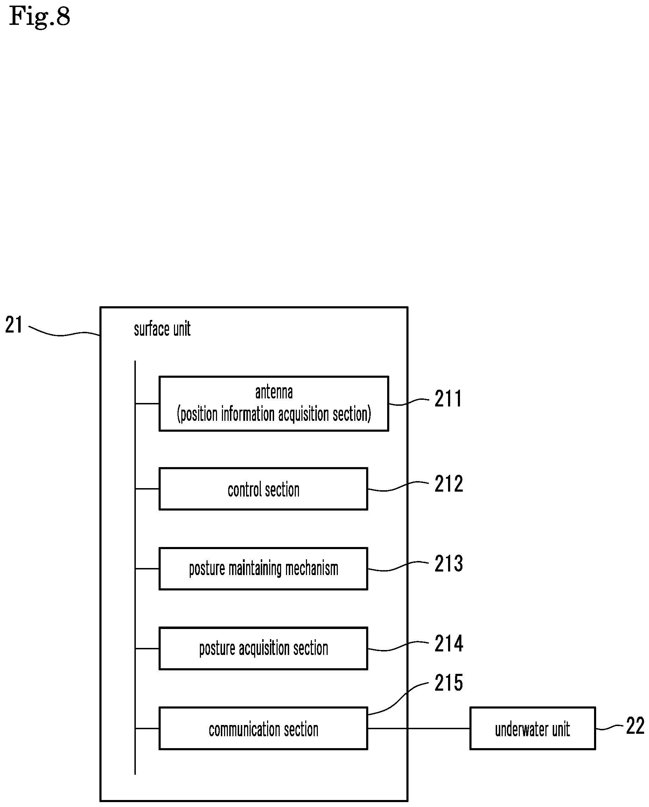

Fig. 8 is a functional block diagram representing a configuration example of the surface unit 21 relating to the suspended device 2 provided in the detection system according to the present application. The surface unit 21 has various mechanisms including an antenna 211 (a position information acquisition section), a control section 212, a posture maintaining mechanism 213, a posture acquisition section 214, and a communication section 215. The various mechanisms in the surface unit 21 mainly serve to acquire and process position information. Position information is acquired by means of a Global Navigation Satellite System (GNSS, including a global positioning system). Examples of the GNSS include the Global Positioning System (GPS) (the United States), GLObal'naya NAvigatsionnaya Sputnikovaya Sistema (GLONASS) (Russia), Galileo (the European Union), Compass (China), Quasi-Zenith Satellite System (QZSS) (Japan), etc. In the example described below, the GPS is used as the GNSS.

The antenna 211 has a function of receiving radio waves from a GPS satellite (a GNSS satellite), with position information superimposed over the radio waves. The antenna 211 can acquire information (date, time, latitude, longitude, ellipsoidal height, etc.) that contains position information and that is superimposed over the received radio waves. The ellipsoidal height acquired from the GPS satellite is a height vertical to an ellipsoidal surface approximated to a geoid surface that represents an equipotential surface of earth's gravity. An altitude (a water depth) of the seafloor (the bottom of water) can be calculated by the ellipsoidal height and the geoid surface.

The control section 212 includes a microprocessing unit (MPU), a chip such as memory, and is a circuit for executing various processing for the surface unit 21 and controlling the surface unit 21 as a whole. The posture maintaining mechanism 213 serves to maintain the posture of the antenna 211, the mechanism required to acquire position information, or the surface unit 21 as a whole, for example, by using a mechanism such as a gimbal mechanism. The posture acquisition section 214 serves to detect the posture of the rod-like member 20, the surface unit 21, or the underwater unit 22, by using a device or a sensor such as an inertial measurement unit (IMU), an inertial navigation system (INS), a gyro sensor, or an acceleration sensor. The communication section 215 serves to transmit various information including the position information to the underwater unit 22. The communication section 215 is communicably connected with the underwater unit 22 by wired communication using a communication line passing through the inside of the rod-like member 20 or by wireless communication.

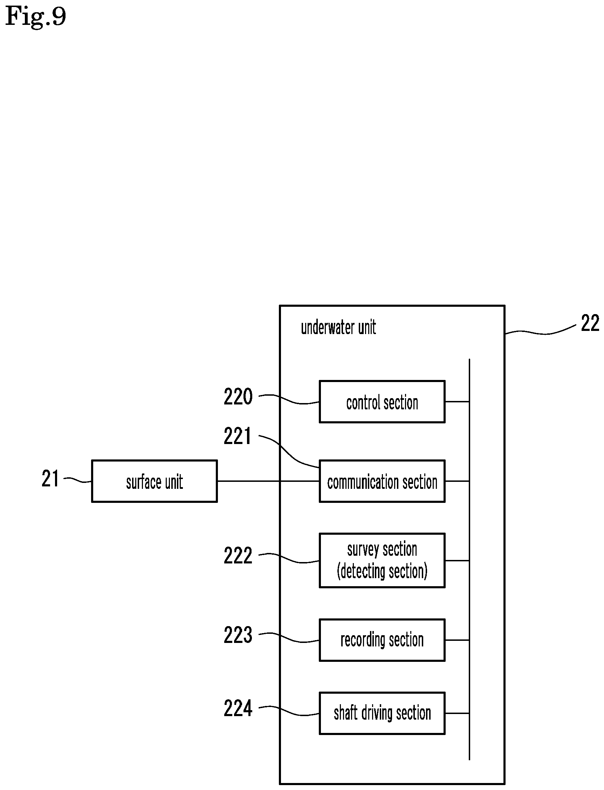

Fig. 9 is a functional block diagram representing a configuration example of the underwater unit 22 relating to the suspended device 2 provided in the detection system according to the present application. The underwater unit 22 has a control section 220, a communication section 221, a survey section 222 (a detecting section), a recording section 223, a shaft driving section 224, and the like. The underwater unit 22 mainly has mechanisms for conducting a survey of underwater conditions such as seafloor topography.

The control section 220 includes a microprocessing unit (MPU), a chip such as memory, and is a circuit for executing various processing for the underwater unit 22 and controlling the underwater unit 22 as a whole. The communication section 221 serves to receive various information including the position information that is transmitted from the surface unit 21. The communication section 221 is communicably connected with the surface unit 21 by wired communication or by wireless communication. The survey section 222 serves to conduct a survey of underwater conditions such as seafloor topography. For example, the survey section 222 conducts an extensive survey of seafloor topography by echo sounding, by emitting sound waves as multiple beams in a fan shape, and receiving and analyzing reflected waves that are reflected by a reflection target such as the seafloor. The recording section 223 is a recording medium used as a data logger that records a survey result in association with the information including the position information that is acquired from the surface unit 21 by the communication section 221. The shaft driving section 224 serves to control the control section 220, thereby causing rotation of the support shaft 24 and controlling the angle between the float 23 and the rod-like member 20.

### (Detection method)

The following description concerns a detection method using the detection system configured as above. The aerial vehicle 1, with the suspended device 2 retained horizontally, is allowed to fly over to a survey point autonomously or by remote control using a controller. When the aerial vehicle 1 reaches above the survey point, the aerial vehicle 1 releases the suspended device 2 that has been retained, activates the winding mechanism 11 to wind out the string-like member 3, and drops the suspended device 2 such that the float 23 floats on the water surface.

When dropped to the water surface, the suspended device 2 starts a survey, with the longitudinal direction of the rod-like member 20 oriented substantially vertically, the float 23 floating on the water surface, the surface unit 21 staying above water, and the underwater unit 22 staying under water. During the survey, the antenna 211 of the surface unit 21 receives radio waves from the GPS satellite and acquires information including position information (specifically, date, time, latitude, longitude, ellipsoidal height, etc.). The surface unit 21 also acquires posture information detected by the posture acquisition section 214 and indicating the posture of the rod-like member 20, the surface unit 21, or the underwater unit 22. The surface unit 21 transmits the acquired information including the position information and the posture information from the communication section 215 to the underwater unit 22.

The communication section 221 of the underwater unit 22 receives various information including the position information and the posture information from the surface unit 21. The control section 220 of the underwater unit 22 derives the position and posture of the survey section 222 from the received various information. The position of the survey section 222 can be derived from calculations using: the information indicating the position of the antenna 211 (latitude, longitude, ellipsoidal height, etc.) based on the information received by the antenna 211; the posture of the rod-like member 20, the surface unit 21, or the underwater unit 22 received as the posture information; and the length of the rod-like member 20 recorded in advance, for example. The control section 220 of the underwater unit 22 conducts a survey of underwater conditions such as seafloor topography by means of the survey section 222, associates a survey result with the acquired information indicating the position of the survey section 222, and records the survey result in the recording section 223. In this respect, the position information associated with the survey result is not limited to the position information and the like received by the antenna 211, and may be other position information that can be used to derive seafloor topography.

After the completion of the survey, the aerial vehicle 1 winds in the string-like member 3 to which the suspended device 2 is attached, retains the suspended device 2 with the rod-like member 20 oriented substantially horizontally, and flies to a predetermined return point autonomously or by remote control using a controller.

As described above, the detection system according to the present application conducts detection of underwater conditions (for example, a survey of seafloor topography), with the suspended device 2 being suspended from the aerial vehicle 1. Use of the aerial vehicle 1 enables execution of a detection operation in various environments, for example, in a shallow sea area where watercraft navigation is difficult and in inland rivers, lakes, reservoir, etc., and thus brings remarkably advantageous effects. Additionally, when the detecting section in the detection system according to the present application is the survey section 222 for conducting a survey of underwater topography by means of sound waves, the detection system can detect a detection target such as seafloor topography in the deep sea where the sunlight or other light is less likely to reach or seafloor topography in a poorly transparent sea area.

The present invention is not limited to the above-described embodiment, and can be embodied and practiced in other different forms. Therefore, the above-described embodiment is considered in all respects as illustrative and not restrictive. The scope of the invention is indicated by the appended claims rather than by the foregoing description. All variations and modifications falling within the equivalency range of the appended claims are intended to be embraced in the scope of the invention.

For example, the above embodiment mentions seafloor topography as the detection target, and conducts a survey of seafloor topography as the detection of underwater conditions. The present invention is not limited to this embodiment, and may choose various underwater conditions as the detection target. For example, the detection target may be selected from various objects and events including a school of fish in water, underwater temperature, underwater turbidity, underwater floating substances, and specific components contained in water. The survey of seafloor topography is not limited to the multibeam survey by the survey section 222. Instead, the survey may be a single-beam survey or may be conducted in various manners. Further, the survey section 222 may be arranged in various manners. For example, the survey section 222 may be equipped with a posture maintaining mechanism, so that the survey section 222 can emit beams immediately below at any time during a survey even when the aerial vehicle 1 is flying level.

As the position information acquisition section, the above description mentions, for example, the antenna 211 for acquiring information that is superimposed over radio waves received from the GPS satellite. Additionally, the position information acquisition section may also encompass other components such as the communication section 221 in which the information received by the antenna 211 is received by the underwater unit 22, and the control sections 212, 220 in which the position information about the survey section 222 is derived from the information received by the antenna 211. In other words, the position information acquisition section includes one or mechanisms, circuits, and like components for receiving and processing (for example, deriving) the position information to be recorded in association with the survey result. Further, the position information acquisition section does not have to be provided in the surface unit 21, and may be provided in the underwater unit 22 or in a different component. Furthermore, the surface unit 21 may only have the antenna 211, and instead the underwater unit 22 may have various mechanisms including the control sections 212, 220 in which the position information about the survey section 222 is derived from the received information, the posture acquisition section 214, and the like. The surface unit 21 and the underwater unit 22 can be designed variously as appropriate.

Regarding the detection of underwater conditions, the above-described embodiment, for example, uses the float 23 so as to cause the surface unit 21 of the suspended device 2 to stay above water and to cause the underwater unit 22 to stay under water. However, the present invention is not limited to this embodiment. For example, the present invention can be appropriately designed to detect underwater conditions, by omitting the float 23 and suspending the suspended device 2 in such a manner as to be entirely submerged in water. In the embodiment omitting the float 23, the attachment 230 to which the string-like member 3 is attached can be formed at any portion of the suspended device 2, for example, on the surface unit 21. Also in the embodiment using the float 23, the attachment 230 may be formed at a portion other than the float 23.

Regarding the winding mechanism 11, the above-described embodiment provides the winding mechanism 11, for example, in the aerial vehicle 1. However, the present invention is not limited to this embodiment. The winding mechanism 11 may be provided in the suspended device 2 or may be arranged in various manners.

### Reference Signs List

- 1: aerial vehicle
- 10: flight mechanism
- 11: winding mechanism
- 12: control section
- 120: arm portion
- 121: grip portion
- 13: control section
- 2: suspended device
- 20: rod-like member
- 21: surface unit
- 211: antenna (position information acquisition section)
- 212: control section
- 213: posture maintaining mechanism
- 214: posture acquisition section
- 215: communication section
- 22: underwater unit
- 220: control section
- 221: communication section
- 222: survey section (detecting section)
- 223: recording section
- 224: shaft driving section
- 23: float
- 230: attachment
- 24: support shaft
- 3: string-like member

## Claims

1. A detection system for detecting underwater conditions, comprising:
an aerial vehicle; and
a suspended device suspended from the aerial vehicle,
wherein the suspended device comprises:
a detecting section that performs an underwater detection operation; and
a position information acquisition section that acquires position information.

2. The detection system according to claim 1, wherein
the suspended device further comprises a float that floats on a water surface, and
the detecting section is mounted to stay below the float during the detection operation.

3. The detection system according to claim 2, wherein
the suspended device comprises, as the position information acquisition section, an antenna that receives a radio wave from a GNSS satellite, and
the antenna is mounted to stay above the float during the detection operation.

4. The detection system according to any one of claims 1 to 3, wherein
the suspended device further comprises a posture acquisition section that acquires posture information.

5. The detection system according to any one of claims 1 to 4, further comprising:
a string-like member that connects the aerial vehicle and the suspended device to each other; and
a winding mechanism capable of winding in the string-like member.

6. A suspended device that can be suspended from an aerial vehicle, the suspended device comprising:
an attachment to which a string-like member can be attached;
a detecting section that performs an underwater detection operation; and
a position information acquisition section that acquires position information.

7. A detection method using an aerial vehicle,
the method comprising:
suspending the suspended device according to claim 6 from the aerial vehicle, by the string-like member attached to the attachment;
allowing the aerial vehicle to fly such that the detecting section of the suspended device stays under a water surface; and
detecting underwater conditions by the detecting section.
